# EUROPEAN PATENT SPECIFICATION

(11) **EP 4 246 633 B1**
(45) Date of publication and mention of the grant of the patent: **09.09.2026**
(21) Application number: 21915865.6
(22) Date of filing: 30.12.2021
(51) Int. Cl.: H01M 8/04119, H01M 8/04492, B01D 63/02, F16K 3/02, F16K 17/04, F16K 31/00

(54) **FUEL CELL MEMBRANE HUMIDIFIER AND FUEL CELL SYSTEM COMPRISING SAME**
BEFEUCHTER FÜR EINE BRENNSTOFFZELLENMEMBRAN UND BRENNSTOFFZELLENSYSTEM DAMIT
HUMIDIFICATEUR À MEMBRANE DE PILE À COMBUSTIBLE ET SYSTÈME DE PILE À COMBUSTIBLE LE COMPRENANT

(30) Priority: 31.12.2020 KR 20200189268; 29.12.2021 KR 20210191774
(43) Date of publication of application: 20.09.2023
(73) Proprietor: Kolon Industries, Inc., Seoul 07793 (KR)
(72) Inventor: HER, Jung Kun, Seoul 07793 (KR); KIM, Do Woo, Seoul 07793 (KR); AN, Woong Jeon, Seoul 07793 (KR); KIM, Kyoung Ju, Seoul 07793 (KR)
(74) Representative: Vossius & Partner Patentanwälte Rechtsanwälte mbB
(86) International application number: PCT/KR2021/020252
(87) International publication number: WO 2022/146068

(56) References cited:
- EP-A1- 2 792 917
- DE-A1- 102017 116 266
- KR-A- 20140 076 385
- KR-A- 20140 086 217
- KR-A- 20140 086 217
- KR-A- 20150 078 420
- KR-A- 20190 138 288
- KR-A- 20200 101 590
- KR-B1- 101 694 056
- KR-B1- 102 035 836
- US-A- 4 196 745
- US-A1- 2005 072 578
- US-A1- 2016 036 073
- US-A1- 2020 185 738
- US-A1- 2020 251 756
- US-A1- 2020 266 464
- US-B2- 6 764 529
- US-B2- 9 911 998

## Description

### Technical Field

The present disclosure relates to a fuel cell membrane humidifier capable of regulating dry gas pressure in a fuel cell membrane humidifier by discharging dry gas to an outside according to the dry gas pressure in the membrane humidifier, and a fuel cell system including the same.

### Background Art

A fuel cell is a power-generating cell that produces electricity by combining hydrogen and oxygen. A fuel cell can continuously produce electricity as long as hydrogen and oxygen are supplied, unlike conventional chemical batteries such as dry cells and storage batteries, and has the advantage of being about twice as efficient as internal combustion engines because there is no heat loss.

In addition, because chemical energy generated by a combination of hydrogen and oxygen is directly converted into electrical energy, fuel cells emit less pollutants. Therefore, fuel cells are not only environmentally friendly characteristics, but also reducing concerns about resource depletion due to increasing energy consumption."

Depending on the type of electrolyte used, these fuel cells may be classified largely into Polymer Electrolyte Membrane Fuel Cell (PEMFC), Phosphoric Acid Fuel Cell (PAFC), and Molten Carbonate Fuel Cell (MCFC), solid oxide fuel cell (SOFC), and alkaline fuel cell (AFC).

Although each of these fuel cells operates on the same fundamental principle, they differ in the type of fuel used, operating temperature, catalyst, electrolyte, and other factors. Among them, Polymer Electrolyte Membrane Fuel Cell (PEMFC) is known to be the most promising fuel cell not only in small-scale stationary power generation equipment, but also in transportation systems, due to its operation at low temperatures compared to other fuel cells and high power density, which allows for miniaturization.

One of the most important factors in improving the performance of Polymer Electrolyte Membrane Fuel Cells (PEMFC) is to maintain function efficiency by supplying a certain amount of moisture to the Polymer Electrolyte Membrane (PEM) or Proton Exchange Membrane in the Membrane Electrode Assembly (MEA)." This is because when the polymer electrolyte membrane is dried, power generation efficiency is rapidly reduced.

There are several methods to humidify a Polymer Electrolyte Membrane, including 1) a bubbler humidification method for supplying moisture by passing a target gas through a diffuser after filling a pressure vessel with water, 2) a direct injection method for supplying moisture directly to a gas passage through a solenoid valve by calculating a required moisture supply for fuel cell reaction, and 3) a membrane humidifying method for supplying moisture to a gas fluid layer using a polymer separation membrane.

Among these methods, a membrane humidifying method for humidifying a polymer electrolyte membrane by supplying water vapor to gas to be supplied to the polymer electrolyte membrane, by use of a membrane which selectively allows only water vapor included in off-gas to pass therethrough is advantageous in that the humidifier can be lightweight and miniaturized.

The selective permeable membrane used in the membrane humidifying method is preferably a hollow fiber membrane having a large permeable area per unit volume when a module is formed. In other words, when a humidifier is manufactured using a hollow fiber membrane, high integration of hollow fiber membrane with large contact surface area is possible, so it is possible to sufficiently humidify a fuel cell even with a small capacity, to use low-cost materials, and to recover moisture and heat contained in off-gas discharged at a high temperature from the fuel cell and thus reuse the recovered moisture and heat through the humidifier.

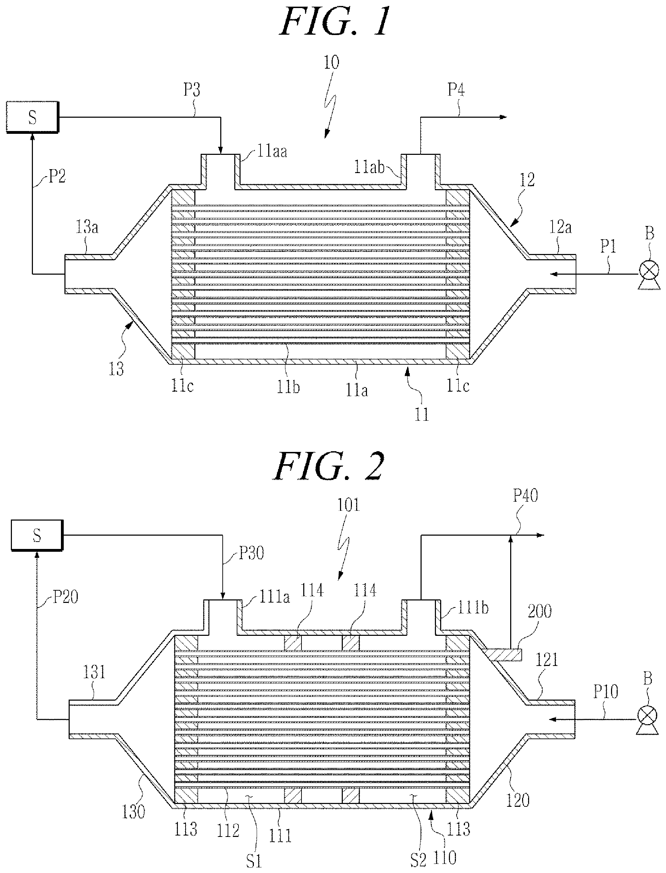

FIG. 1 is a view showing a fuel cell membrane humidifier and a fuel cell system including the same according to a related art.

As shown in FIG. 1, the fuel cell system of the related art includes a blower B, a fuel cell membrane humidifier 10 (hereinafter referred to as "membrane humidifier"), a fuel cell stack S, and passages P1, P2, P3, and P4 connecting the aforementioned components. P1 is a dry gas supply passage for supplying dry gas collected in the blower B to the membrane humidifier 10, and P2 is a humidifying gas supply passage for supplying gas humidified in the membrane humidifier 10 to the fuel cell stack S. P3 is an off-gas supply passage for supplying off-gas discharged from the fuel cell stack S to the membrane humidifier 10, and P4 is an off-gas discharge passage for discharging off-gas with moisture exchanged to the outside.

The membrane humidifier 10 includes a humidifying module 11 in which moisture is exchanged between the dry gas supplied from the blower B and the off-gas (wet gas) discharged from the fuel cell stack S, and caps 12 and 13 coupled to both ends of the humidifying module 11.

A dry gas inlet 12a is formed in a cap 12 on the side of the blower B to supply the dry gas supplied from the blower B to the humidifying module 11, and a dry gas outlet 13a is formed in the cap 13 on the side of the stack S to supply the gas humidified by the humidifying module 11 to the fuel cell stack S.

The humidifying module 11 includes a mid-case 11a having an off-gas inlet 11aa and an off-gas outlet 11ab, and a plurality of hollow fiber membranes 11b within the mid-case 11a. Both ends of a bundle of hollow fiber membranes 11b are fixed to a potting part 11c. The potting part 11c is generally formed by curing a liquid polymer such as liquid polyurethane resin through a casting method.

The dry gas supplied from the blower B flows along the hollow of the hollow fiber membranes 11b. The off-gas introduced into the mid-case 11a through the off-gas inlet port 11aa contacts outer surfaces of the hollow fiber membranes 11b and is then discharged from the mid-case 11a through the off-gas outlet port 11 ab. When the off-gas contacts the outer surfaces of the hollow fiber membranes 11b, moisture contained in the off-gas permeates the hollow fiber membranes 11b to humidify the dry gas flowing along the hollow of the hollow fiber membranes 11b.

Meanwhile, when the membrane humidifier 10 normally operates, the dry gas introduced into the dry gas inlet 12a is humidified while flowing along the hollow of the hollow fiber membranes 11b, and discharged to the fuel cell stack S through the dry gas outlet 13a.

However, when the membrane humidifier 10 does not operate normally due to various reasons such as abnormal operation of the fuel cell stack S, breakage of the hollow fiber membranes 11b, clogging of the passages of the hollow fiber membranes 11b, etc., the dry gas introduced through the dry gas inlet 12a may not be discharged through the dry gas outlet 13a. As a result, the pressure of the drying gas may increase in the membrane humidifier 10 and the membrane humidifier 10 may be damaged accordingly. US 2020/266464 A1 relates to a humidifier for a fuel cell. US 2005/072578 A1 relates to methods of using a thermally-controlled valve in a wellbore to regulate the flow of fluid such as steam into and out of the wellbore. KR 102 035 836 B1 relates to a steam trap.

### Disclosure

### Technical problem

An object of the present disclosure is to provide a fuel cell membrane humidifier capable of regulating dry gas pressure in the fuel cell membrane humidifier by discharging dry gas to an outside according to dry gas pressure in a membrane humidifier, and a fuel cell system including the same.

### Technical Solution

The invention is specified by the independent claim. Preferred embodiments are defined in the dependent claim. In the following description, although numerous features may be designated as optional, it is nevertheless acknowledged that all features comprised in the independent claim are not to be read as optional.

Other specific details of implementations according to various aspects of the present disclosure are included in the detailed description below.

### Advantageous Effects

In a fuel cell membrane humidifier and a fuel cell system including the same according to embodiments of the present disclosure, it is possible to adjust pressure of dry gas in the membrane humidifier by discharging the dry gas to an outside according to pressure of dry gas introduced into the membrane humidifier. Therefore, when the membrane humidifier does not operate normally for various reasons, it is possible to prevent damage to the membrane humidifier by regulating the pressure in the membrane humidifier.

### Description of Drawings

FIG. 1 is a diagram illustrating a fuel cell system according to a related art.
FIGS. 2 to 5 are diagrams illustrating a fuel cell membrane humidifier and a fuel cell
FIGS. 6, 8, 10 and 12 are diagrams illustrating a pressure regulator of a fuel cell membrane humidifier (Of these, only Fig. 12 is according to the present claims).
FIGS. 7, 9, 11, and 13 are diagrams illustrating an operation process of a pressure regulator of a fuel cell membrane humidifier. Of these, only Fig. 13 is according to the present claims.

### [Mode for Disclosure]

The present disclosure may include various modifications and embodiments, and therefore, the present disclosure will be explained in detail by taking exemplary embodiments.

The terms and expressions used in the present disclosure are used only for the purpose of illustrating particular embodiments, and are not intended to limit the present disclosure. Unless stated otherwise, an expression of singularity is intended to include expressions of plurality. It should be noted that the terms "include" or "have" as used in the present disclosure are intended to denote the existence of any features, numerical values, steps, operations, constituent elements, parts, and combinations thereof described in the specification, but are not intended to preliminarily exclude the possibility of existence or addition of any one or more other features, numerical values, steps, operations, constituent elements, parts, and combinations thereof. Hereinafter, a fuel cell membrane humidifier and a fuel cell system including the same according to an embodiment of the present disclosure will be described with reference to the drawings. In the following, several embodiments are presented. Embodiments not covered by the claims are to be understood as examples useful for understanding the invention.

FIGS. 2 to 5 are diagrams illustrating a fuel cell membrane humidifier and a fuel cell system including the same according to embodiments of the present disclosure.

As shown in FIGS. 2 to 5, a fuel cell membrane humidifier and a fuel cell system including the same according to embodiments of the present disclosure include a blower B, a fuel cell membrane humidifier 100 (101 to 104) (hereinafter also referred to as a "membrane humidifier"), a fuel cell stack S, and flow passages P10, P20, P30, and P40 connecting the aforementioned components.

The blower B collects gas in the air and supplies the collected gas to the membrane humidifier 100 (101 to 104). An output size of the blower B may be determined according to an output size of the fuel cell stack S. Optionally, a filter (not shown) for removing fine dust may be installed at a front of the blower B, and a cooler (not shown) for cooling dry gas supplied into the membrane humidifier 100 may be installed between the blower B and the membrane humidifier 100.

The membrane humidifier 100 humidifies the dry gas and supplies the humidified gas to the fuel cell stack S. The membrane humidifier 100 includes a humidifying module 110 for humidifying the dry gas supplied from the blower B with moisture contained in off-gas discharged from the fuel cell stack S. Both ends of the humidifying module 110 are coupled to the caps 120 and 130, respectively. The humidifying module 110 and the caps 120 and 130 may be formed separately or integrally.

A dry gas inlet 121 may be formed in the cap 120 on the side of the blower B to supply the dry gas supplied from the blower B to the humidifying module 110, and a dry gas outlet 131 is formed in the cap 120 on the side of the stack S to supply the gas humidified by the humidifying module 110 to the fuel cell stack S.

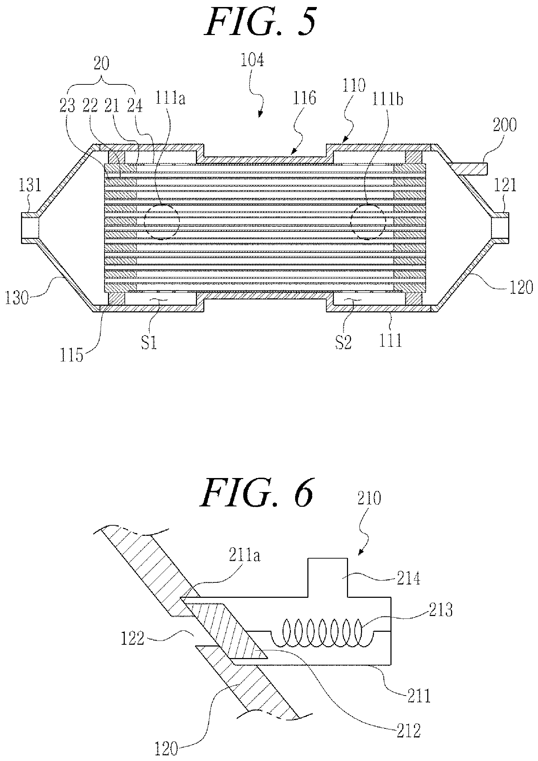

In the cap 120 on the side of the blower B, a pressure regulator 200 (210 to 240) to be closed or open according to pressure of dry gas in the gap 120 to regulate dry gas pressure in the cap 120 may be formed. The pressure regulator 200 (210 to 240) will be described later with reference to FIGS. 6 to 13.

The dry gas inlet 121 is connected to a dry gas supply passage P10 connecting the blower B and the membrane humidifier 100, and the dry gas outlet 131 is connected to a humidified gas supply passage P20 connecting the cap 130 on the side of the fuel cell stack S and the fuel cell stack S. The off-gas discharged from the fuel cell stack S is supplied to the membrane humidifier 100 through an off-gas supply passage P30, and the off-gas with moisture exchanged in the membrane humidifier 100 is discharged to the outside through an off-gas discharge passage P40.

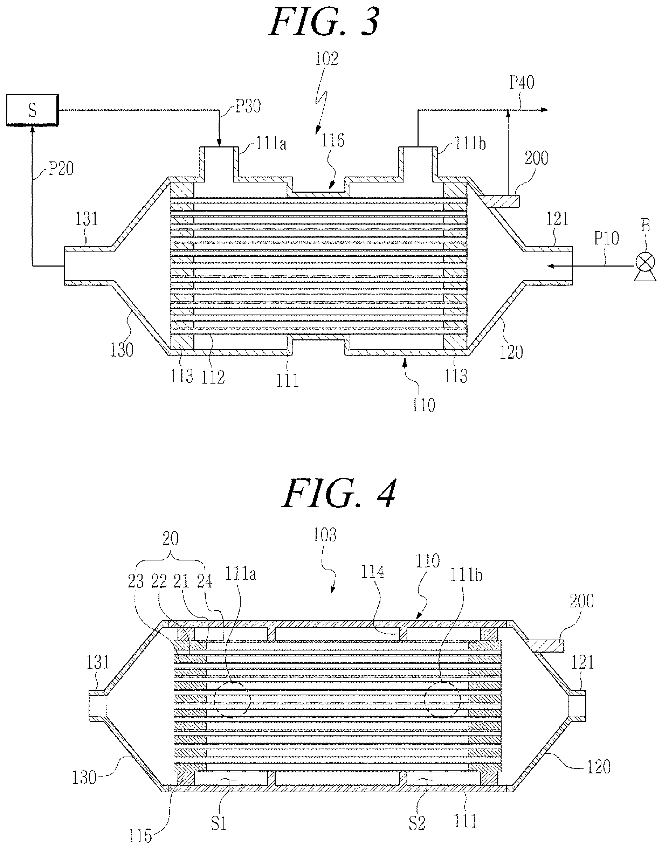

As shown in FIGS. 2 and 3, the humidifying module 110 is a device for exchanging moisture between the off-gas and the dry gas supplied from the blower B, and includes a mid-case 111 having an off-gas inlet 111a and an off-gas outlet 111b and a plurality of hollow fiber membranes 112 accommodated in the mid-case 111. Both ends of a bundle of hollow fiber membranes 112 are fixed to a potting part 113.

Alternatively, as shown in FIGS. 4 and 5, the humidifying module 110 includes at least one cartridge 20 including a plurality of hollow fiber membranes 22 and a potting part 23 for fixing the same to each other, and in this case, the hollow fiber membranes 22 and the potting part 23 may be formed in an inner case 21, which is a separate cartridge case. In this case, the hollow fiber membranes 22 may be accommodated in the inner case 21, and the potting part 23 may be formed at an end of the inner case 21. When the humidifying module 110 includes a cartridge 20, a fixing layer 115 for fixing the cartridge may be formed between both ends of the cartridge and the mid-case 111. The fixing layer 115 may be a resin layer formed of resin or a gasket assembly that is air-tightly coupled through mechanical assembling. The inner case 21 includes mesh holes 24 arranged in a mesh shape for fluid communication with a first space S1 and a second space S2.

As shown in FIGS. 2 and 4, the internal space of the mid-case 111 may be divided into a first space S1 and a second space S2 by the partition wall 114. Partitions 114 may prevent the off-gas flowing into the off-gas inlet 111a from directly flowing into the off-gas outlet 111b by bypassing the hollow fiber membranes 112 and 22 without moisture exchange.

Alternatively, as shown in FIGS. 3 and 5, an internal space of the mid-case 111 may be divided into the first space S1 and the second space by a central recessed portion 116 recessed at the center of the mid-case 111. The central recessed portion 116 may prevent the off-gas introduced into the off-gas inlet 111a from directly flowing into the off-gas outlet 111b by bypassing without exchanging moisture with the hollow fiber membranes 112 and 22.

The mid-case 111 and the caps 120 and 130 may be independently formed of hard plastic or metal, and may have circular or polygonal cross sections in a width direction. "Circular" includes ovals, and "polygonal" includes polygons with rounded corners. For example, the hard plastic may be polycarbonate, polyamide (PA), polyphthalamide (PPA), polypropylene (PP), or the like.

The hollow fiber membranes 112 and 22 may include a polymer film that is formed of polysulfone resin, polyethersulfone resin, sulfonated polysulfone resin, polyvinylidene fluoride (PVDF) resin, polyacrylonitrile (PAN) resin, polyimide resin, and polyamideimide resin, a polyesterimide resin, or a mixture of at least two thereof, and the potting part 113 may be formed by curing a liquid resin such as a liquid polyurethane resin through a casting method such as deep potting or centrifugal potting.

In the exemplary embodiments of the present disclosure shown in FIGS. 2 to 5, the pressure regulator 200 (210 to 240) to be closed or open by dry gas pressure in the cap 120 to thereby regulate dry gas pressure in the cap 120 is formed in the cap 120 on the side of the blower B. This will be described with reference to FIGS. 6 to 13.

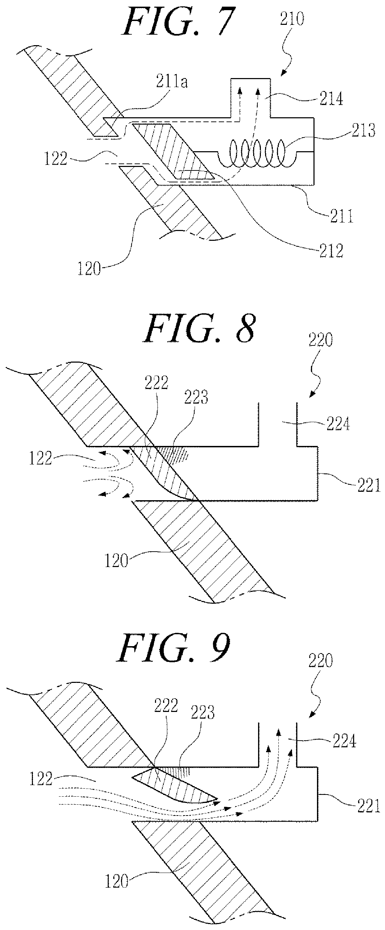

FIG. 6 is a diagram illustrating a pressure regulator according to a first embodiment not according to the present invention, and FIG. 7 is a diagram illustrating an operation process of the pressure regulator according to the first embodiment not according to the present invention.

As shown in FIG. 6 not according to the present invention, a pressure regulator 210 of the first embodiment not according to the present invention may include a buffer housing 211, an opening and closing member 212, an elastic member 213, and a gas outlet 214.

The buffer housing 211 has a predetermined shape and is formed to communicate with the dry gas discharge hole 122 formed in the cap 120. The buffer housing 211 provides a space for the opening and closing member 212 to move forward and backward, and provides a space where the dry gas in the cap 120 can move when the opening and closing member 212 moves backward to open the dry gas discharge hole 122.

In an opening on the side of the dry gas discharge hole 122 of the buffer housing 211, a protrusion 211a extending from the cap 120 and allowing the opening and closing member 212 to be caught thereby may be formed. Alternatively, the protrusion 211a may protrude from at least one of an upper surface and a lower surface of the buffer housing 211.

The opening and closing member 212 has an area larger than that of the dry gas discharge hole 122 so as to be caught by the protrusion 211a, and is formed in a shape for opening and closing the dry gas discharge hole 122.

A front surface of the opening and closing member 212 opens and closes the dry gas discharge hole 122, and in a rear surface of the opening and closing member 212, an elastic member 213 capable of compressing or expanding according to pressure of the dry gas in the cap 120 is formed. The elastic member 213 may be fixed and formed in the rear surface of the opening and closing member 212 and an inner wall of one side of the buffer housing 211. The elastic member 213 may be, for example, a spring. Of course, it is not limited thereto, and heat-resistant rubber, synthetic resin, etc. may be used as a material for the elastic member 213.

A gas outlet 214 is formed in at least one surface of the buffer housing 211. As shown in FIG. 7 not according to the present invention, when the opening and closing member 212 moves backward to open the dry gas discharge hole 122, the dry gas in the cap 120 is introduced into the buffer housing 211 through the dry gas discharge hole 122 and discharged to the outside through the gas outlet 214 and the off-gas discharge passage P40 (see FIG. 2).

FIG. 8 is a diagram illustrating a pressure regulator according to a second embodiment not according to the present invention, and FIG. 9 is a diagram illustrating an operation process of the pressure regulator according to the second embodiment not according to the present invention.

As shown in FIG. 8 not according to the present invention, a pressure regulator 220 according to the second embodiment not according to the present invention may include a buffer housing 221, an opening and closing member 222, an elastic member 223, and a gas outlet 224.

The buffer housing 221 has a predetermined shape and is formed to communicate with the dry gas discharge hole 122 formed in the cap 120. The buffer housing 221 provides a space in which the hinged opening and closing member 222 can pivot, and provides a space where the dry gas in the cap 120 can move when the opening and closing member 222 pivots backward to partially open the dry gas discharge hole 122. Here, the inner side of the cap is referred to as "front", and the outer side of the cap is referred to as "rear".

The opening and closing member 222 is hinge-connected to an upper end of the dry gas discharge hole 122, and an end thereof is formed in an arch shape so as to be pivotable without friction according to the pressure of the dry gas.

A front surface of the opening and closing member 222 opens and closes the dry gas discharge hole 122, and in a rear surface of the opening and closing member 222, an elastic member 223 capable of compressing or expanding according to the pressure of the dry gas in the cap 120 is formed. The elastic member 223 may be fixed and formed in the rear surface of the opening and closing member 222 and an upper inner wall of the buffer housing 221. The elastic member 223 may be, for example, a spring. Of course, it is not limited thereto, and heat-resistant rubber, synthetic resin, etc. may be used as a material for the elastic member 223.

A gas outlet 224 is formed on at least one surface of the buffer housing 221. As shown in FIG. 9 not according to the present invention, when the opening and closing member 222 pivots backward to open the dry gas discharge hole 122, the dry gas in the cap 120 is introduced into the buffer housing 221 through the dry gas discharge hole 122 and discharged to the outside through the gas outlet 224 and the off-gas discharge passage P40 (see FIG. 2).

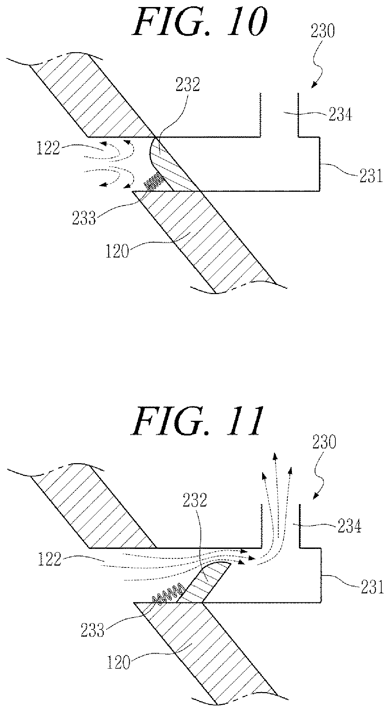

FIG. 10 is a diagram illustrating a pressure regulator according to a third embodiment not according to the present invention, and FIG. 11 is a diagram illustrating an operation process of the pressure regulator according to the third embodiment not according to the present invention.

As shown in FIG. 10 not according to the present invention, a pressure regulator 230 according to the third embodiment not according to the present invention may include a buffer housing 231, an opening and closing member 232, an elastic member 233, and a gas outlet 234. Compared to the pressure regulator 220 of the second embodiment not according to the present invention, the installation positions of the opening and closing member 232 and the elastic member 233 are different, but other configuration of the pressure regulator 230 of the third embodiment not according to the present invention are substantially the same, and thus, a repeated description thereof will be omitted.

In this embodiment, the opening and closing member 232 is hinged to a lower end of the dry gas discharge hole 122, and an end thereof is formed in an arch shape so as to be pivotable without friction according to the pressure of the dry gas.

A front surface of the opening and closing member 232 opens and closes the dry gas discharge hole 122, and in a rear surface of the opening and closing member 232, an elastic member 233 capable of compressing or extending according to the pressure of the dry gas in the cap 120 is formed. The elastic member 233 may be fixed and formed in the front surface of the opening and closing member 232 and an inner wall of the dry gas discharge hole 122.

As shown in FIG. 11 not according to the present invention, when the opening and closing member 232 pivots backward to open the dry gas discharge hole 122, the dry gas in the cap 120 is introduced into the buffer housing 231 through the dry gas discharge hole 122 and discharged to the outside through the gas outlet 234 and the off-gas discharge passage P40 (see FIG. 2).

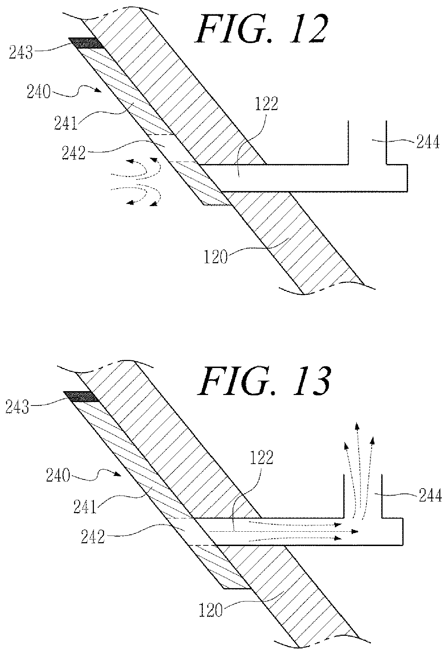

FIG. 12 is a diagram illustrating a pressure regulator according to a fourth embodiment, and FIG. 13 is a diagram illustrating an operation process of the pressure regulator according to the fourth embodiment.

As shown in FIG. 12, a pressure regulator 240 according to the fourth embodiment may include a thermally expandable metal 241, a through hole 242, a stopper 243, and a gas outlet 244.

The thermally expandable metal 241 is generally formed in a bar shape near the dry gas discharge hole 122 on the inner wall of the cap 120. The thermally expandable metal 241 is formed of a metal material capable of expanding or contracting according to a change in temperature of the drying gas.

The through-hole 242 penetrating the thermally expandable metal 241 is formed at a predetermined position of the thermally expandable metal 241. The through hole 242 is formed in a shape corresponding to the shape of the dry gas discharge hole 122, and may partially open the dry gas discharge hole 122 according to expansion of the thermally expandable metal 241and close the dry gas discharge hole 122 according to contraction of the thermally expandable metal 241.

The stopper 243 may be formed at an end of the thermally expandable metal 241. The stopper 243 is formed of a heat-resistant material that expands/contracts less according to a change in temperature of the dry gas than the thermally expandable metal 241, and serves as a starting point of expansion or contraction of the thermally expandable metal 241.

The gas outlet 244 is formed to communicate with the dry gas outlet hole 122.

When the membrane humidifier operates normally, the dry gas in the cap 120 has a constant pressure and the temperature thereof may be maintained at a constant level. (Ideal Gas Equation) In this case, as shown in FIG. 12, the thermally expandable metal 241 remains in an unexpanded state, and the through hole 242 remains at a position to close the dry gas discharge hole 122.

When the membrane humidifier operates abnormally, the pressure of the dry gas in the cap 120 is increased and the temperature is also increased accordingly. In this case, as shown in FIG. 13, the thermally expandable metal 241 expands, and the through hole 242 moves according to the expansion of the thermally expandable metal 241 and is disposed at a position to open the dry gas discharge hole 122.

When the dry gas discharge hole 122 is opened, the dry gas in the cap 120 is discharged to the outside through the dry gas discharge hole 122, the gas outlet 244, and the off-gas discharge passage P40 (see FIG. 2).

After a certain period of time, when the dry gas is discharged and the pressure is lowered, the temperature is also lowered, and the thermally expandable metal 241 contracts the through-hole 242 returns to its original position, and, as shown in FIG. 12, the through-hole 242 closes the dry gas discharge hole 122.

According to a fuel cell membrane humidifier and a fuel cell system including the same according to embodiments of the present disclosure, it is possible to regulate pressure of dry gas in the membrane humidifier by discharging the dry gas to an outside according to pressure of the dry gas introduced into the membrane humidifier.

Therefore, when the membrane humidifier does not operate normally for various reasons, it is possible to prevent damage to the membrane humidifier by regulating the pressure in the membrane humidifier.

### [Detailed Description of Main Elements]

| | | | |
|---|---|---|---|
| 100 (100 to 104): | fuel cell membrane humidifier | | |
| 110: | humidifying module | 111: | mid-case |
| 112: | hollow fiber membrane | 113: | potting part |
| 114: | partitions | 116: | central recessed portion |
| 111a: | off-gas inlet | 111b: off-gas | outlet |
| 20: | cartridge | 21: | inner case |
| 22: | hollow fiber membrane | 23: | potting part |
| 24: | mesh holes | | |
| 120, 130: | cap | | |
| 200 (210 to 240): | pressure regulator | | |
| B: | blower S: fuel cell stack | | |
| P10: | dry gas supply passage | P20: | dry gas supply passage |
| P30: | off-gas supply passage | P40: | off-gas discharge passage |

## Claims

1. A fuel cell membrane humidifier (100) comprising:
a humidifying module (110) including a mid-case (111) having an off-gas inlet (111a) and an off-gas outlet (111b);
a cap (120) fastened to the mid-case (111) and having a dry gas discharge hole (122) through which dry gas is discharged; and
a pressure regulator (200) formed in the cap (120) and partially opening the dry gas discharge hole (122) according to pressure of dry gas in the cap (120) to regulate the pressure of the dry gas in the cap (120),
wherein the pressure regulator (200) comprises:
a thermally expandable metal (241) formed in an inner wall of the cap (120) and expanding according to a change in temperature of the dry gas in the cap (120); and
a through-hole (242) formed in the thermally expandable metal (241) and partially opening the dry gas discharge hole (122) according to expansion of the thermally expandable metal (241).

2. The fuel cell membrane humidifier according to claim 1, wherein the pressure regulator further comprises a stopper (243) formed at an end of the thermally expandable metal (241) and formed of a heat-resistant material.

## Patentansprüche

1. Brennstoffzellenmembran-Befeuchter, (100) aufweisend:
ein Befeuchtungsmodul (110) mit einem Mittelgehäuse (111), das einen Abgaseinlass (111a) und einen Abgasauslass (111b) aufweist;
eine Kappe (120), die an dem Mittelgehäuse (111) befestigt ist und eine Trockengasauslassöffnung (122) aufweist, durch die Trockengas abgeleitet wird; und
einen Druckregler (200), der in der Kappe (120) ausgebildet ist und die Trockengasauslassöffnung (122) entsprechend dem Druck des Trockengases in der Kappe (120) teilweise öffnet, um den Druck des Trockengases in der Kappe (120) zu regulieren,
wobei der Druckregler (200) aufweist:
ein thermisch ausdehnbares Metall (241), das in einer Innenwand der Kappe (120) ausgebildet ist und sich entsprechend einer Temperaturänderung des Trockengases in der Kappe (120) ausdehnt; und
ein Durchgangsloch (242), das in dem thermisch ausdehnbaren Metall (241) ausgebildet ist und die Trockengasauslassöffnung (122) entsprechend der Ausdehnung des thermisch ausdehnbaren Metalls (241) teilweise öffnet.

2. Brennstoffzellenmembran-Befeuchter nach Anspruch 1, wobei der Druckregler ferner einen Stopper (243) aufweist, der an einem Ende des thermisch ausdehnbaren Metalls (241) ausgebildet ist und aus einem hitzebeständigen Material besteht.

## Revendications

1. Humidificateur à membrane pour pile à combustible (100) comprenant:
un module d'humidification (110) incluant un boîtier intermédiaire (111) ayant une entrée de gaz résiduaire (111a) et une sortie de gaz résiduaire (111b);
un couvercle (120) fixé au boîtier intermédiaire (111) et ayant un orifice d'évacuation de gaz sec (122) par lequel le gaz sec est évacué; et
un régulateur de pression (200) formé dans le couvercle (120) et ouvrant partiellement l'orifice d'évacuation de gaz sec (122) en fonction de la pression du gaz sec dans le couvercle (120) pour réguler la pression du gaz sec dans le couvercle (120),
dans lequel le régulateur de pression (200) comprend:
un métal thermiquement dilatable (241) formé dans une paroi interne du couvercle (120) et se dilatant en fonction d'un changement de température du gaz sec dans le couvercle (120); et
un orifice traversant (242) formé dans le métal thermiquement dilatable (241) et ouvrant partiellement l'orifice d'évacuation de gaz sec (122) en fonction de la dilatation du métal thermiquement dilatable (241).

2. Humidificateur à membrane pour pile à combustible selon la revendication 1, dans lequel le régulateur de pression comprend en outre une butée (243) formée à une extrémité du métal thermiquement dilatable (241) et formée d'un matériau résistant à la chaleur.
